# EUROPEAN PATENT SPECIFICATION

(11) **EP 2 042 235 B1**
(45) Date of publication and mention of the grant of the patent: **21.03.2018**
(21) Application number: 08159719.7
(22) Date of filing: 04.07.2008
(51) Int. Cl.: B01J 21/04, B01J 21/10, B01J 23/00, B01J 23/02, B01J 23/58, B01J 37/02, B01J 37/06

(54) **Method for producing regeneration catalyst for working solution usable for hydrogen peroxide production**
Verfahren zur Herstellung eines katalysators für die Regenerierung einer Lösung zur Herstellung von Wasserstoffperoxid
Procédé de production d'un catalyseur de régénération d' une solution pour la production de peroxyde d'hydrogène

(30) Priority: 11.07.2007 JP 2007182178
(43) Date of publication of application: 01.04.2009
(73) Proprietor: Mitsubishi Gas Chemical Company, Inc., Tokyo 100-8324 (JP)
(72) Inventor: Hasegawa, Hiroshi, Ibaraki 314-0102 (JP); Iura, Katsuhiro, Ibaraki 314-0102 (JP); Hagiwara, Isao, Ibaraki 314-0102 (JP)
(74) Representative: Cabinet Plasseraud

(56) References cited:
- EP-A- 0 546 616
- WO-A-2004/060553
- WO-A-2005/060519
- DE-A1- 19 715 034
- JP-A- 9 278 420
- JP-A- 10 156 180
- US-A- 3 965 251
- US-A- 5 104 837

## Description

### BACKGROUND OF THE INVENTION

### 1. Field of the Invention

The present invention relates to a method for producing a catalyst for regenerating a working solution usable for producing hydrogen peroxide by an anthraquinone method, and a regeneration catalyst obtained by such a method.

### 2. Description of the Related Art

Hydrogen peroxide is industrially produced by reducing and oxidizing repeatedly a working solution which is obtained by dissolving, for example, alkylanthraquinone having an alkyl substituent (hereinafter, referred to as "alkylanthraquinone") and alkyltetrahydroanthraquinone having an alkyl substituent (hereinafter, referred to as "alkyltetrahydroanthraquinone") in an appropriate organic solvent. When the reduction and oxidation process is repeated, alkyloxyanthrone, alkyltetrahydroanthraquinone epoxide and the like are accumulated in the working solution as by-products, which decreases the production efficiency of hydrogen peroxide.

As a method for regenerating or transforming these by-products into anthraquinones, the following methods have been proposed: a method of treating the pre-reduction working solution at a temperature of 40 to 150°C in the presence of a catalyst containing γ-alumina as a main component (Japanese Laid-Open Patent Publication No. 9-278419); a method of treating the pre-reduction working solution in the presence of molded active alumina having an SiO₂ concentration of 0.01 to 15% by weight (Japanese Laid-Open Patent Publication No. 2000-239006); and a method of treating the pre-reduction working solution in the presence of Na-containing alumina obtained by drop coagulation or extrusion molding (Japanese National-Phase PCT Laid-Open Patent Publication No. 2000-509701).

These methods do not regenerate all the by-products into anthraquinones, and thus generate new by-products (hereinafter, referred to as the "deteriorated products") by the regeneration reaction. As a method for removing such deteriorated products, the following methods have been proposed: a method of removing the deteriorated products after the effective anthraquinones are extracted and recovered (Japanese Patent Publication for Opposition No. 4-21602), a method of removing the deteriorated products by distillation (Japanese Patent Publication for Opposition No. 55-23762), a method of removing the deteriorated products by selective extraction (Japanese Patent Publication for Opposition No. 5-12281), and the like. Nonetheless, a catalyst for suppressing the generation of the deteriorated products has been desired.

### SUMMARY OF THE INVENTION

An object of the present invention is to solve the problems of the conventional art as described above and provide a catalyst for regenerating alkyloxyanthrone and alkyltetrahydroanthraquinone into alkylanthraquinone and regenerating alkyltetrahydroanthraquinone epoxide into alkyltetrahydroanthraquinone.

As a result of conducting active studies on the above problems, the present inventors found the following and achieved the present invention. When a catalyst, which is obtained by preparing active alumina from pure aluminum hydroxide, then supporting magnesium having a concentration in a certain range to active alumina and treating the resultant substance with ammonia before burning the substance, is used for regenerating a working solution, it is made possible to efficiently and selectively regenerate or transform alkyloxyanthrone and alkyltetrahydroanthraquinone into alkylanthraquinone and to regenerate or transform alkyltetrahydroanthraquinone epoxide into alkyltetrahydroanthraquinone without increasing the generation amount of deteriorated products of anthraquinones, organic solvents or the like.

Namely;
<1> The present invention is a method for producing a catalyst for regenerating a working solution usable for producing hydrogen peroxide by an anthraquinone method, comprising treating active alumina with an aqueous solution containing 20% by weight or greater of a magnesium salt, followed by treatment of the resultant substance with ammonia and then burning of the obtained substance at 300-800°C.
<2> A preferable embodiment of the present invention is the method according to <1>, wherein the magnesium salt is magnesium chloride.
<3> Another preferable embodiment of the present invention is the method according to <1> or <2>, wherein an aqueous solution of ammonia having a pH of 9 to 13 is used for the treatment with ammonia.
<4> Another preferable embodiment of the present invention is the method according to any of <1> through <3>, wherein the amount of magnesium supported to the active alumina as a result of treating the active alumina with the aqueous solution containing the magnesium salt is 1 to 50% by weight with respect to the weight of post-burning magnesium-supported active alumina.
<5> Another preferable embodiment of the present invention is the method according to any of <1> through <4>, wherein after burning, a metal compound containing at least one type of metal selected from the group consisting of palladium, rhodium, ruthenium and platinum is supported in an amount of 0.1 to 10% by weight with respect to the weight of post-burning magnesium-supported active alumina.
<6> The present invention discloses a catalyst for regenerating a working solution usable for producing hydrogen peroxide by an anthraquinone method, the catalyst being produced by the method according to any of <1> through <5>.

With a regeneration catalyst produced according to the present invention, by-products which cannot generate hydrogen peroxide can be selectively regenerated into effective anthraquinones while deterioration of anthraquinones and organic solvents is prevented. This effect is especially conspicuous when a reaction is caused at a high temperature in order to regenerate alkyltetrahydroanthraquinone into alkylanthraquinone.

### BEST MODE FOR CARRYING OUT THE INVENTION

Hereinafter, the present invention will be described in detail.

Pure aluminum hydroxide may be produced by, for example, the known Bayer method. By this method, bauxite as a raw material is treated with sodium hydroxide to dissolve aluminum as aluminate, and SiO₂, Fe₂O₃ and TiO₂ in the mineral are precipitated to be separated as bauxite residue. Then, a solution of sodium aluminate is treated with hydrolysis to precipitate aluminum hydroxide. As a result, pure aluminum hydroxide (gibbsite type) is obtained.

As a method for obtaining active alumina, the following known methods are available, for example: (1) a method of pre-burning gibbsite type aluminum hydroxide (hereinafter, referred to simply as the "gibbsite pre-burning method"), (2) a method of neutralizing an aluminum salt to obtain gel-like aluminum hydroxide and pre-burning the gel-like aluminum hydroxide, (3) a method of neutralizing an aluminum salt to obtain alumina sol and pre-burning the alumina sol, and (4) a method of treating an organic aluminum compound with hydrolysis to obtain gel-like aluminum hydroxide and pre-burning the gel-like aluminum hydroxide. According to a specific example of (1) the gibbsite pre-burning method, aluminum hydroxide having an average particle diameter of 0.1 to 200 µm obtained by the Bayer process or the like is put into contact with an air flow having a temperature of about 500 to about 1200°C and a linear velocity of about 5 to about 50 m for about 0.1 to about 10 seconds (instantaneous pre-burning method). Known methods for producing molded active alumina include pan granulation, extrusion molding, compression molding, flow molding, crush molding and the like. Although there is no specific limitation on the particle diameter, when too fine particles are used, the pressure loss in the reactor is undesirably large; whereas when too large particles are used, the activity is decreased.

Active alumina is caused to support magnesium by (1) treating active alumina mentioned above with a 20% by weight to saturated aqueous solution of a magnesium salt, (2) then, treating the resultant substance with ammonia and (3) then, burning the obtained substance. Examples of the magnesium salt include magnesium chloride and hydrates thereof, magnesium nitrate and hydrates thereof, and the like. Specific examples thereof include MgCl₂, Mg(NO₃)₂, MgSO₄, MgCO₃, MgPO₄ MgO and the like. The treatment with a magnesium-containing aqueous solution is preferably performed at a temperature of 10 to 50°C for 30 minutes to 100 hours. A more preferable temperature is 20 to 40°C, and a more preferable treating time is 6 to 72 hours.

The magnesium-containing aqueous solution is preferably a 50% by weight to saturated aqueous solution of a magnesium salt, and is especially preferably an 80% by weight to saturated aqueous solution of a magnesium salt. The alumina carrier is unlikely to be impregnated with MgO. Therefore, when the content of the magnesium salt is less than 20% by weight, the number of times of impregnation is increased and thus the operability is decreased.

For supporting magnesium to active alumina, treatment with ammonia is performed in order to remove chloride ions, nitrate ions and the like. For this treatment, ammonia water is preferably used. The pH of ammonia water for the treatment is preferably adjusted to 9 to 13, and more preferably to 10 to 12. The ratio of the chloride ions or nitrate ions remaining in active alumina is preferably 3% by weight or less, and more preferably 1.5% by weight or less, with respect to the weight of post-burning magnesium-supported active alumina. The ratio of magnesium supported to active alumina is preferably 1 to 50% by weight, and more preferably 1 to 20% by weight, with respect to the weight of the post-burning magnesium-supported active alumina.

The time of treatment with ammonia is preferably 30 minutes to 100 hours, and more preferably 6 to 72 hours.

An advantage of using ammonia water as a pH adjustor at the time of magnesium impregnation is that chloride ions or nitrate ions to be removed become NH₄Cl or (NH₄)NO₃, which has a high water solubility and thus can be removed from the catalyst in a subsequent burning process. NH₄Cl is sublimed, and (NH₄)NO₃ is decomposed.

When NaOHaq is used as a pH adjustor at the time of magnesium impregnation, chloride ions or nitrate ions to be removed become NaCl or NaNO₃. In this case, NaCl or NaNO₂ (deliquescent) may possibly remain in the catalyst even after the subsequent burning process.

As a burning apparatus, a box-type burning furnace, a rotary kiln or the like is usable. The burning temperature is preferably 300 to 800°C, and more preferably 400 to 700°C. The burning time is preferably 30 minutes to 100 hours, and more preferably 6 to 72 hours.

As described above, according to the present invention, active alumina is immersed in a magnesium-containing solution, and then ammonia is added thereto. By contrast, according to a conventional method, active alumina immersed in a magnesium-containing solution is first evaporated to be dried and burned. Then, the resultant substance is treated with an alkaline solution to remove chloride ions, nitrate ions or the like which act as a catalytic poison, and then is dried. By the conventional method, in the case where MgCl₂ is used as a magnesium-containing reagent, the alumina carrier is damaged during the time when active alumina is evaporated to be dried and burned because MgCl₂ is deliquescent. In the case where Mg(NO₃)₂ is used as a magnesium-containing reagent, NO₂ which is hazardous, is generated during the time when active alumina is evaporated to be dried and burned. NO₂ reacts with moisture in the air to generate nitric acid, which corrodes the apparatus. In addition, MgO, with which active alumina was impregnated during the alkaline treatment process, is re-dissolved in the solution. In the case where MgSO₄ or MgPO₄ is used as a magnesium-containing reagent, substantially the same problem occurs.

According to the present invention, active alumina is uniformly impregnated with magnesium, while chloride ions, nitrate ions or the like acting as a catalytic poison can be removed out to the solution in the form of an ammonium salt. This method is ideal to impregnate active alumina with MgO. A regeneration catalyst according to the present invention may support a metal compound such as palladium, rhodium, ruthenium, platinum or the like. The content of such a metal compound is preferably 0.1 to 10% by weight, and more preferably 0.4 to 2% by weight, with respect to the weight of burned magnesium-supported active alumina. The metal compound is usually supported in the state of metal, but may be supported in the form of an oxide or any other compound which can be easily reduced to metal under certain reaction conditions. A regeneration catalyst according to the present invention may contain sodium, potassium or silicon dioxide. The presence of these materials does not spoil the effects of the present invention.

### Examples

Hereinafter, the present invention will be described by way of examples, which do not limit the present invention in any way. In the examples, % indicates % by weight unless otherwise specified.

### 1. Evaluation apparatus

Evaluation on the regeneration of a working solution was performed using a packed bed reactor (formed of SUS) or a stirring reactor (formed of SUS) in a regeneration process. The evaluation apparatus will be described below.

A working solution was prepared by dissolving amylanthraquinones sampled from a production plant in a mixed solvent of 60% by volume of 1,2,4-trimethylbenzene and 40% by volume of diisobutylcarbinol such that the solid content would be 300 g/L. The total amount of the working solution in a circulation reactor which includes reduction, oxidation and extraction process sections was about 40 L.

The reduction process section is a stirring tank reactor with an amount of the working solution of about 4 L. 200 g of a hydrogenation catalyst sampled from a production plant was put into the reactor to hydrogenate anthraquinones. The reaction temperature was 40°C. The circulation amount of the working solution was 0.25 L/min., and the amount of supplied hydrogen was 1.8 L/min. After the catalyst is separated from the working solution by a filter and the working solution is treated with an oxidation process and an extraction process, the working solution is returned to a supply tank, from which the working solution is to be supplied to the reactor. To the regeneration process section, the working solution was supplied from this tank.

In the case where the regeneration process section was a packed bed reactor, a working solution heated to 150°C was poured through the reactor filled with 1200 mL of a catalyst in an upward direction from a bottom portion thereof The top and bottom of the catalyst-filled section were fixed by a burned filter having an opening of 20 µm.

In the case where the regeneration process section was a stirring tank reactor, 250 g of a regeneration catalyst was put into the reactor and a working solution heated to 150°C was introduced thereto through a candle-shaped burned metal filter having a filtering precision of 3 µm. Then, nitrogen gas containing ethylene gas was introduced through a burned metal filter from the bottom of the tank.

The packed bed reactor and the stirring tank reactor were both heated from outside the main body. In order to keep the temperature of the catalyst-filled section as uniform as possible, the working solution was heated to a predetermined temperature before being introduced into the catalyst-filled section. The supply amount of the working solution was adjusted such that the residence time in the catalyst-filled section would be about 1 hour. The working solution to be supplied was fully treated with nitrogen seal before being introduced into the reactor.

### Evaluation method of regeneration

According to the present invention, the regeneration reaction was evaluated by two methods. According to one method, the concentrations of amyloxyanthrone, amyltetrahydroanthraquinone and amyltetrahydroanthraquinone epoxide in the working solution in the tank before the reduction process and in the working solution discharged from the regeneration reactor were measured by liquid chromatography, and the regeneration ability was evaluated based on the concentration difference among the components.

The other method is as follows. After hydrogen peroxide was produced for 30 days by the above-described evaluation apparatus, the concentrations of amylanthraquinone, amyltetrahydroanthraquinone, amyloxyanthrone and amyltetrahydroanthraquinone epoxide in the working solution were measured by liquid chromatography. The weight occupied by these substances in unit volume of the working solution was calculated. The calculated weight was set as the weight occupied by effective anthraquinones in unit volume of the working solution. Then, the total solid content per unit volume of the working solution was measured. The difference between the total solid content and the weight of the effective anthraquinones was set as the weight of the deteriorated products of anthraquinones, and the ratio of the weight of the deteriorated products with respect to the total solid content was calculated. Based on a variance in this ratio, the deterioration of the anthraquinones was evaluated. The total solid content per unit volume of the working solution was calculated as follows. About 5 g of the working solution and 20 ml of pure water were put into a beaker, immersed in a hot water bath of 100°C for 6 hours, dried in a drying device of 120°C for 30 minutes and cooled down. Based on the post-cooling weight, the total solid content was calculated.

The deterioration of the organic solvent was evaluated by measuring the concentration of diisobutylketone, which is a deteriorated product of diisobutylcarbinol, in the working solution using gas chromatography.

### (Example 1)

To 500 ml of a saturated solution of magnesium chloride 6-hydrate (produced by Wako Pure Chemical Industries, Ltd.), 200 g of γ-alumina (produced by Sumitomo Chemical Co., Ltd.; trade name: KHD-12) was added. Next, an aqueous solution of ammonia was added thereto while the resultant liquid was stirred with the temperature being kept at about 30°C, and adjustment was made such that the resultant solution would have a pH of 9 to 13. Thus, magnesium oxide was immobilized such that the ratio of magnesium oxide with respect to post-burning magnesium-supported γ-alumina would be about 5% by weight. In this process, the treating time with the magnesium-containing aqueous solution was 30 hours, and the treating time with the aqueous solution of ammonia was 40 hours. The resultant substance was burned at 600°C for 24 hours in a box-type burning furnace. The obtained catalyst was subjected to composition analysis (semi-quantitative value) using a fluorescent x-ray analyzer (RIX-3100 produced by RIGAKU Corporation) to find the following results. The ratio of magnesium oxide with respect to post-burning magnesium-supported alumina was 4.6% by weight (when converted to magnesium, 2.8% by weight), and the chlorine content was 1.1% by weight.

The prepared regeneration catalyst was evaluated by the circulation reactor including the above-mentioned packed bed reactor installed therein. In the working solution which was discharged from the packed bed reactor on Day 15 from the start of the circulation reaction, the amount of amyloxyanthrone was decreased by 19 mmol/L than in the working solution in the tank before the hydrogenation reaction. The amount of amyltetrahydroanthraquinone was increased by 25 mmol/L, and the amount of amyltetrahydroanthraquinone epoxide was decreased by 22 mmol/L, when compared in the same manner.

On Day 30 from the start of the circulation reaction, the ratio of deteriorated products of anthraquinones with respect to the total solid content in the working solution in the circulation reactor was increased by 0.8%, and 0.5% of diisobutylcarbinol was changed to diisobutylketone.

### (Example 2)

A regeneration catalyst was prepared by the same method as in Example 1, except that magnesium oxide was immobilized such that the ratio of magnesium oxide with respect to post-burning magnesium-supported γ-alumina would be about 10% by weight. The resultant substance was burned at 600°C for 28 hours in the box-type burning furnace. The obtained catalyst was subjected to composition analysis (semi-quantitative value) using the fluorescent x-ray analyzer to find the following results. The ratio of magnesium oxide with respect to post-burning magnesium-supported alumina was 9.5% by weight (when converted to magnesium, 5.7% by weight), and the chlorine content was 0.8% by weight.

The prepared alumina catalyst was evaluated by the circulation reactor including the same packed bed reactor as in Example 1 installed therein. In the working solution which was discharged from the packed bed reactor on Day 15 from the start of the circulation reaction, the amount of amyloxyanthrone was decreased by 20 mmol/L than in the working solution in the tank before the hydrogenation reaction. The amount of amyltetrahydroanthraquinone was increased by 21 mmol/L, and the amount of amyltetrahydroanthraquinone epoxide was decreased by 25 mmol/L, when compared in the same manner.

On Day 30 from the start of the circulation reaction, the ratio of deteriorated products of anthraquinones with respect to the total solid content in the working solution in the circulation reactor was increased by 0.4%, and 0.3% of diisobutylcarbinol was changed to diisobutylketone.

### (Example 3)

A regeneration catalyst was prepared by the same method as in Example 1, except that magnesium oxide was immobilized such that the ratio of magnesium oxide with respect to post-burning magnesium-supported γ-alumina would be about 20% by weight The resultant substance was burned at 600°C for 48 hours in the box-type burning furnace. The obtained catalyst was subjected to composition analysis (semi-quantitative value) using the fluorescent x-ray analyzer to find the following results. The ratio of magnesium oxide with respect to post-burning magnesium-supported alumina was 18.2% by weight (when converted to magnesium, 11.0% by weight), and the chlorine content was 1.5% by weight.

The prepared alumina catalyst was evaluated by the circulation reactor including the same packed bed reactor as in Example 1 installed therein. In the working solution which was discharged from the packed bed reactor on Day 15 from the start of the circulation reaction, the amount of amyloxyanthrone was decreased by 21 mmol/L than in the working solution in the tank before the hydrogenation reaction. The amount of amyltetrahydroanthraquinone was increased by 23 mmol/L, and the amount of amyltetrahydroanthraquinone epoxide was decreased by 20 mmol/L, when compared in the same manner.

On Day 30 from the start of the circulation reaction, the ratio of deteriorated products of anthraquinones with respect to the total solid content in the working solution in the circulation reactor was increased by 0.3%, and 0.3% of diisobutylcarbinol was changed to diisobutylketone.

### (Comparative Example 1)

γ-alumina (produced by Sumitomo Chemical Co., Ltd.; trade name: KHD-12) was evaluated by the circulation reactor including the same packed bed reactor as in Example 1 installed therein.

In the working solution which was discharged from the packed bed reactor on Day 15 from the start of the circulation reaction, the amount of amyloxyanthrone was decreased by 22 mmol/L than in the working solution in the tank before the hydrogenation reaction The amount of amyltetrahydroanthraquinone was increased by 23 mmol/L, and the amount of amyltetrahydroanthraquinone epoxide was decreased by 24 mmol/L, when compared in the same manner.

On Day 30 from the start of the circulation reaction, the ratio of deteriorated products of anthraquinones with respect to the total solid content in the working solution in the circulation reactor was increased by 4.6%, and 5.0% of diisobutylcarbinol was changed to diisobutylketone.

### (Comparative Example 2)

AA400G (14 to 48 meshes) produced by Alcan Chemicals was used as γ-alumina instead of KHD-12 produced by Sumitomo Chemical Co., Ltd., and was evaluated by the circulation reactor including the same packed bed reactor as in Example 1 installed therein.

In the working solution which was discharged from the packed bed reactor on Day 15 from the start of the circulation reaction, the amount of amyloxyanthrone was decreased by 20 mmol/L than in the working solution in the tank before the hydrogenation reaction. The amount of amyltetrahydroanthraquinone was increased by 25 mmol/L, and the amount of amyltetrahydroanthraquinone epoxide was decreased by 22 mmol/L.

On Day 30 from the start of the circulation reaction, the ratio of deteriorated products of anthraquinones with respect to the total solid content in the working solution in the circulation reactor was increased by 5.0%, and 5.5% of diisobutylcarbinol was changed to diisobutylketone.

### (Example 4)

To 500 ml of a saturated solution of magnesium chloride 6-hydrate (produced by Wako Pure Chemical Industries, Ltd.), 250 g of γ-alumina (produced by Sumitomo Chemical Co., Ltd.; trade name: AC-12) was added. Next, an aqueous solution of ammonia was added thereto while the resultant liquid was stirred with the temperature being kept at about 30°C, and adjustment was made such that the resultant solution would have a pH of 9 to 13. Thus, magnesium oxide was immobilized such that the ratio of magnesium oxide with respect to post-burning magnesium-supported γ-alumina would be about 10% by weight. In this process, the treating time with the magnesium-containing aqueous solution was 26 hours, and the treating time with the aqueous solution of ammonia was 71 hours. The resultant substance was burned at 600°C for 35 hours in the box-type burning furnace

500 ml of pure water was added to 200 g of the prepared catalyst. While the resultant substance was stirred at room temperature at 300 rpm with a Teflon (registered trademark) stirring blade, a palladium solution prepared by dissolving 3.33 g of palladium chloride (produced by Ishifuku Metal Industry Co., Ltd.; purity: 99.00% or higher; Pd: 59.82%) in 0.33 ml of 36% hydrochloric acid (Wako Pure Chemical Industries, Ltd.; guaranteed reagent) and 150 ml of pure water was dripped thereto over 90 minutes. When the dripping was finished, the resultant substance was raised to 80°C while being stirred and left for 30 minutes Then, the resultant substance was washed with pure water, and the catalyst was recovered using a Buchner funnel. The obtained catalyst was dried at 120°C for 12 hours in the box-type burning surface mentioned above. The catalyst was subjected to composition analysis (semi-quantitative value) using the fluorescent x-ray analyzer to find the following results. The ratio of magnesium oxide with respect to post-burning magnesium-supported alumina was 9.4% by weight (when converted to magnesium, 5.7% by weight), and the chlorine content was 0.5% by weight. The palladium content was 0.99% by weight.

The prepared regeneration catalyst was evaluated by a circulation reactor which is the same as in Example 1, except that a stirring tank reactor was installed instead of the packed bed reactor and that for the working solution, anthraquinones sampled from a production plant which exclude amyltetrahydroanthraquinone and amyltetrahydroanthraquinone epoxide were used.

In the working solution which was discharged from the stirring tank reactor on Day 15 from the start of the circulation reaction, the amount of amyloxyanthrone was decreased by 9 mmol/L than in the working solution in the tank before the hydrogenation reaction. The amount of amyltetrahydroanthraquinone was decreased by 1 mmol/L, when compared in the same manner.

On Day 30 from the start of the circulation reaction, the ratio of deteriorated products of anthraquinones with respect to the total solid content in the working solution in the circulation reactor was increased by 0.1%, and diisobutylcarbinol was not changed to diisobutylketone.

### (Comparative Example 3)

250 g of γ-alumina (produced by Sumitomo Chemical Co., Ltd.; trade name: AC-12) was put into a solution obtained by dissolving 12 g of sodium hydroxide (produced by Wako Pure Chemical Industries, Ltd.) in 1000 ml of pure water to impregnate alumina with sodium, and then the catalyst was recovered using a Buchner funnel. The obtained catalyst was dried at 120°C for 12 hours in the box-type burning surface. The catalyst was subjected to composition analysis (semi-quantitative value) using the fluorescent x-ray analyzer to find the following results. Magnesium oxide was not detected, and the sodium content was 2.4% by weight as converted to an oxidant thereof.

The prepared regeneration catalyst was evaluated in the same method as in Example 4. In the working solution which was discharged from the stirring tank reactor on Day 15 from the start of the circulation reaction, the amount of amyloxyanthrone was decreased by 12 mmol/L than in the working solution in the tank before the hydrogenation reaction. The amount of amyltetrahydroanthraquinone was decreased by 1 mmol/L, when compared in the same manner.

On Day 30 from the start of the circulation reaction, the ratio of deteriorated products of anthraquinones with respect to the total solid content in the working solution in the circulation reactor was increased by 1.0%, and 1.0% of diisobutylcarbinol was changed to diisobutylketone.

### (Comparative Example 4)

250 g of γ-alumina (produced by Sumitomo Chemical Co., Ltd.; trade name: KHD-12) was immersed in 150 ml of a saturated solution of magnesium chloride 6-hydrate (produced by Wako Pure Chemical Industries, Ltd.) and evaporated to be dried on a hot plate. The carrier particles stuck together and the catalyst was not obtained.

Table 1 shows the results regarding the regeneration ability on Day 15 of the circulation reaction, and Table 2 shows the deterioration of anthraquinones and organic solvent on Day 30 of the circulation reaction.

**Table 1 Regeneration ability on Day 15 of the circulation reaction**

| Example No. | MgO amount | Amyloxyanthrone | Amyltetrahydroanthraquinone | Amyltetrahydroanthraquinone epoxide |
|---|---|---|---|---|
| Example 1 | 4.6 wit% | Decreased by 19 mmol/L | Increased by 25 mmol/L | Decreased by 22 mmol/L |
| Example 2 | 9.5 wt% | Decreased by 20 mmol/L | Increased by 21 mmol/L | Decreased by 25 mmol/L |
| Example 3 | 18.2 wt% | Decreased by 21 mmol/L | Increased by 23 mmol/L | Decreased by 20 mmol/L |
| Comparative example 1 | trace | Decreased by 22 mmol/L | Increased by 23 mmol/L | Decreased by 24 mmol/L |
| Comparative example 2 | trace | Decreased by 20 mmol/L | Increased by 25 mmol/L | Decreased by 22 mmol/L |
| Example 4 | 9.4 wt% | Decreased by 9 mmol/L | Decreased by 1 mmol/L | - |
| Comparative example 3 | trace | Decreased by 12 mmol/L | Decreased by 1 mmol/L | - |

**Table 2 Deterioration of anthraquinones and organic solvent on Day 30 of the circulation reaction**

| Example No. | MgO amount | Ratio of deteriorated products of anthraquinones | Diisobutylketone; diisobutylcarbinol |
|---|---|---|---|
| Example 1 | 4.6 wt% | Increased by 0.8% | Changed by 0.5% |
| Example 2 | 9.5 wt% | Increased by 0.4% | Changed by 0.3% |
| Example 3 | 18.2 wt% | Increased by 0.3% | Changed by 0.3% |
| Comparative example 1 | trace | Increased by 46% | Changed by 5.0% |
| Comparative example 2 | trace | Increased by 5.0% | Changed by 5.5% |
| Example 4 | 9.4 wt% | Increased by 0.1% | Not changed |
| Comparative example 3 | trace | Increased by 1.0% | Changed by 1.0% |

## Claims

1. A method for producing a catalyst for regenerating a working solution usable for producing hydrogen peroxide by an anthraquinone method, comprising treating active alumina with an aqueous solution containing 20% by weight or greater of a magnesium salt, followed by treatment of the resultant substance with ammonia and then burning of the obtained substance at 300-800°C.

2. The method according to claim 1, **characterized in that** the magnesium salt is magnesium chloride.

3. The method according to claim 1 or 2, **characterized in that** an aqueous solution of ammonia having a pH of 9 to 13 is used for the treatment with ammonia.

4. The method according to any one of claims 1 to 3, **characterized in that** the amount of magnesium supported to the active alumina as a result of treating the active alumina with the aqueous solution containing the magnesium salt is 1 to 50% by weight with respect to the weight of post-burning magnesium-supported active alumina.

5. The method according to any one of claims 1 to 4, **characterized in that** after burning, a metal compound containing at least one type of metal selected from the group consisting of palladium, rhodium, ruthenium and platinum is supported in an amount of 0.1 to 10% by weight with respect to the weight of post-burning magnesium-supported active alumina.

## Patentansprüche

1. Verfahren zur Herstellung eines Katalysators zur Regeneration einer Arbeitslösung, die zur Herstellung von Wasserstoffperoxid mittels einer Anthrachinonmethode verwendbar ist, umfassend das Behandeln von aktivem Aluminiumoxid mit einer wässrigen Lösung, die 20 Gewichts-% oder mehr eines Magnesiumsalzes enthält, gefolgt von einer Behandlung der resultierenden Substanz mit Ammoniak und anschließendem Brennen der erhaltenen Substanz bei 300-800°C.

2. Verfahren gemäß Anspruch 1, **dadurch gekennzeichnet, dass** das Magnesiumsalz Magnesiumchlorid ist.

3. Verfahren gemäß Anspruch 1 oder 2, **dadurch gekennzeichnet, dass** eine wässrige Ammoniaklösung mit einem pH von 9 bis 13 für die Behandlung mit Ammoniak verwendet wird.

4. Verfahren gemäß mindestens einem der Ansprüche 1 bis 3, **dadurch gekennzeichnet, dass** die Menge an Magnesium, die als Ergebnis der Behandlung des aktiven Aluminiumoxids mit der das Magnesiumsalz-enthaltenden wässrigen Lösung auf dem aktiven Aluminiumoxid geträgert wird, 1 bis 50 Gewichts-% beträgt, bezogen auf das Gewicht des Magnesium-geträgerten aktiven Aluminiumoxids nach dem Brennen.

5. Verfahren gemäß mindestens einem der Ansprüche 1 bis 4, **dadurch gekennzeichnet, dass** nach dem Brennen eine Metallverbindung, die mindestens eine Art Metall enthält, ausgewählt aus der Gruppe bestehend aus Palladium, Rhodium, Ruthenium und Platin, in einer Menge von 0,1 bis 10 Gewichts-% geträgert wird, bezogen auf das Gewicht des Magnesium-geträgerten aktiven Aluminiumoxids nach dem Brennen.

## Revendications

1. Procédé de production d'un catalyseur pour régénérer une solution de travail utilisable pour produire du peroxyde d'hydrogène par un procédé à l'anthraquinone, comprenant le traitement d'alumine active avec une solution aqueuse contenant 20 % en poids ou plus d'un sel de magnésium, suivi par un traitement de la substance résultante avec de l'ammoniaque puis le brûlage de la substance obtenue à 300-800 °C.

2. Procédé selon la revendication 1, **caractérisé en ce que** le sel de magnésium est du chlorure de magnésium.

3. Procédé selon la revendication 1 ou 2, **caractérisé en ce qu'**une solution aqueuse d'ammoniaque ayant un pH de 9 à 13 est utilisée pour le traitement avec de l'ammoniaque.

4. Procédé selon l'une quelconque des revendications 1 à 3, **caractérisé en ce que** la quantité de magnésium supportée sur l'alumine active par suite du traitement de l'alumine active avec la solution aqueuse contenant le sel de magnésium est de 1 à 50 % en poids par rapport au poids de l'alumine active supportée par magnésium post-brûlage.

5. Procédé selon l'une quelconque des revendications 1 à 4, **caractérisé en ce que**, après brûlage, un composé de métal contenant au moins un type de métal choisi dans le groupe consistant en le palladium, le rhodium, le ruthénium et le platine est supporté dans une quantité de 0,1 à 10 % en poids par rapport au poids de l'alumine active supportée par magnésium post-brûlage.
